# EUROPEAN PATENT APPLICATION

(11) **EP 4 671 499 A1**
(43) Date of publication of application: **31.12.2025**
(21) Application number: 25183967.6
(22) Date of filing: 19.06.2025
(51) Int. Cl.: F01D 5/28, F01D 25/00

(54) **REINFORCEMENT PLATE FLANGE JUNCTIONS OF COMPOSITE COMPONENTS**

(30) Priority: 20.06.2024 US 202418749134
(71) Applicant: RTX Corporation, Farmington, CT 06032 (US)
(72) Inventor: WHITE, III, Robert A., Meriden, 06450 (US); SHAHAB, Farruqh, East Hartford, 06118 (US)
(74) Representative: Dehns

(57) **Abstract**

A composite component for a gas turbine engine includes a first composite component portion (52); a second composite component portion (54); and a metallic reinforcement plate (50) connecting the first composite component portion (52) and the second composite component portion (54), wherein the metallic reinforcement plate (50) has a first arm (58) at least partially overlapping the first composite component portion (52), and a second arm (60) at least partially overlapping the second composite component portion (52).

## Description

### FIELD

The present disclosure relates to composite components in turbomachinery such as gas turbine engines.

### BACKGROUND

Gas turbine engines have numerous components which can have complex shapes and which can typically be connected to each other with potentially complicated multi-flange connections. This can be the case, for example, with engine hardware such as cases, ducts and liners, as non-limiting examples.

These components are typically made from metallic materials, and therefore can be heavy, which is not ideal in some settings such as, for example, aircraft applications.

Advanced composite components (e.g., PMCs, MMCs, CMCs) for use in performance gas turbine engine applications is a relatively new design concept that is being explored for low/high pressure compressor (LPC/HPC), low/high pressure turbine (LPT/HPT), fan bypass, combustor, and nozzle environments. Common axisymmetric configurations implement simple flange geometries as a means of reducing the manufacturing complexity and structural uncertainty in what would otherwise need to be a highly complex laminate architecture.

Composite materials have been used in the manufacture of some components of gas turbine engines and present improvements in terms of reducing engine weight and enhancing engine performance. However, composite materials are not well suited to components having flange connections to other components, or even multiple flange connections to such components.

The ability to replace legacy hardware (commonly metallic) with that of composites, as well as preserve the original hardware interfaces, often necessitates highly complex composite geometries, and alternate solutions must be available to accommodate this challenge.

### SUMMARY OF THE DISCLOSURE

In one aspect, there is provided a composite component for a gas turbine engine that comprises a first composite component portion; a second composite component portion; and a metallic reinforcement plate connecting the first composite component portion and the second composite component portion, wherein the metallic reinforcement plate has a first arm at least partially overlapping the first composite component portion, and a second arm at least partially overlapping the second composite component portion.

In a non-limiting configuration, the first arm and the second arm define an angle therebetween which is greater than 0 degrees and less than 180 degrees.

In another non-limiting configuration, the first arm and the second arm have contact surfaces facing the first composite component portion and the second composite component portion, and the contact surfaces define the angle.

In still another non-limiting configuration, the angle is between 20 degrees and 160 degrees.

In a further non-limiting configuration, the first composite component portion and the second composite component portion have a thickness, and wherein the thickness is reduced where the first arm and the second arm overlap the first composite portion and the second composite portion.

In a still further non-limiting configuration, the first composite component portion and the second composite component portion comprise PMC, MMC, CMC and combinations thereof.

In another non-limiting configuration, at least one of the first arm and the second arm is bonded to at least one of the first composite component portion and the second composite component portion.

In still another non-limiting configuration, at least one of the first arm and the second arm is co-bonded to at least one of the first composite component portion and the second composite component portion.

In a further non-limiting configuration, at least one of the first arm and the second arm is mechanically fastened to at least one of the first composite component portion and the second composite component portion.

In a still further non-limiting configuration, composite material of the first and second composite component portions and metallic material of the metallic reinforcement plate are selected to have substantially the same coefficient of thermal expansion.

In another non-limiting configuration, metallic material of the metallic reinforcement plate is selected from the group consisting of Ti-based alloy, Co-based alloy, Ni-based alloy, aluminum and combinations thereof.

In still another non-limiting configuration, the metallic reinforcement plate further comprises a ceramic material.

In a further non-limiting configuration, the metallic material is selected from the group consisting of Ti-based alloy, Co-based alloy, Ni-based alloy and combinations thereof.

In a still further non-limiting configuration, the component is selected from the group consisting of cases, ducts, rings, liners and combinations thereof.

In another non-limiting configuration, the first composite component portion comprises a body portion of the component and the second composite component portion comprises a flange of the component.

In still another non-limiting configuration, the first composite component portion and the second composite component portion define at least two flanges, and the metallic reinforcement plate has arms to extend along all of the at least two flanges.

In a further non-limiting configuration, the first composite component portion and the second composite component portion define a cylindrical surface with an axial flange at a meeting line between the first composite component portion and the second composite component portion, and a radial flange along an edge of each of the first composite component portion and the second composite component portion, and the metallic reinforcement plate has a floor plate extending along a surface of the cylindrical surface, an axial reinforcement arm for reinforcing along the axial flange, and a radial arm for reinforcing the radial flange.

In another aspect, there is provided a metallic reinforcement plate for composite components that comprises a floor having a floor thickness; a first flange reinforcement arm extending from the floor and having a first arm thickness; a second flange reinforcement arm extending from the floor and intersecting the first flange reinforcement arm, the second flange reinforcement arm having a second arm thickness, wherein the first arm thickness and the second arm thickness have increased thickness at a point of intersection of the first flange reinforcement arm and the second flange reinforcement arm.

In a non-limiting configuration, the floor has an increased thickness at a point of intersection of the first flange reinforcement arm and the second flange reinforcement arm.

In another aspect, there is provided a method for making a composite component, wherein the composite component comprises at least a first composite component portion and a second composite component portion, the method comprising the steps of joining the first composite component portion to a metallic reinforcement plate, wherein the metallic reinforcement plate comprises at least a first arm and a second arm, by overlapping the first arm and the first composite component portion; and joining the second composite component portion to the metallic reinforcement plate by overlapping the second arm and the second composite component portion.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a composite component having a flange connected to an adjacent component;
FIG. 2 illustrates a composite component having a reinforcement plate according to one embodiment;
FIG. 3 illustrates a composite component having a reinforcement plate that is bonded with adhesive to the composite portions of the component;
FIG. 4 illustrates a composite component having a co-bonded reinforcement plate;
FIG. 5 illustrates a composite component joined with a metallic reinforcement plate with mechanical fasteners;
FIG. 6 illustrates a non-limiting embodiment;
FIG. 7 illustrates an enlarged portion of FIG. 6;
FIGS. 8 and 9 illustrate reinforcement plates according to the disclosure; and
FIG. 10 illustrates a further non-limiting embodiment of a reinforcement plate.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to components of turbomachinery such as gas turbine engines and the like. Such components have for some time been manufactured from metallic materials such as alloys and superalloys which have desirable properties. However, components made from alloys and other metallic materials are heavy, which is of course not desirable in a setting of aircraft mounted gas turbine engines.

As set forth above, efforts to use composites in place of metallic materials have been successful but there are issues for components having flange connections, especially potentially complicated and/or multiple flange connections.

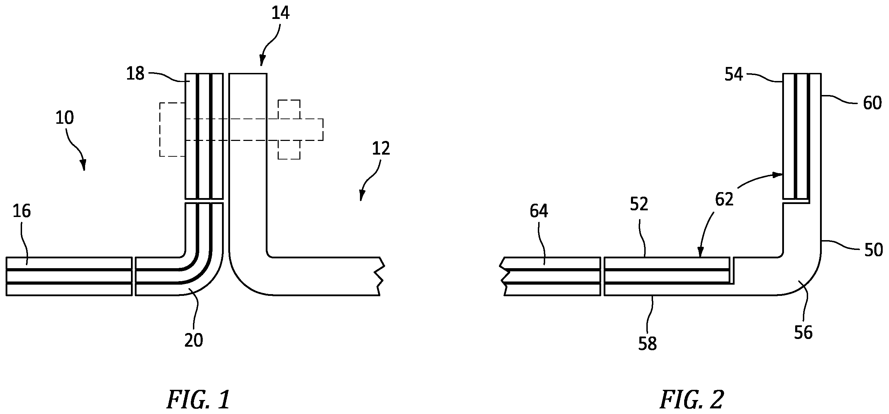

FIG. 1 illustrates such a connection, wherein a composite component 10 is joined to another component 12 at a flange connection 14. Composite components 10, 12 comprise layers of composite material as illustrated at 16, as well as layers of composite material defining a flange as shown at 18. A corner 20 connecting material 16 and material 18 in this instance is also made of a composite material. However, in such a configuration, filler plies must be integrated into the corner of the flange to adjoin the vertical and horizontal portions 18, 16 respectively of the flange. Butt joints and/or interleaves can be used, but these increase manufacturing complexity, which may result in loss of quality in the joint, which ultimately can affect structural integrity.

FIG. 2 illustrates one non-limiting embodiment wherein a jointed detail or metallic reinforcement plate 50 is used to connect a first composite portion 52 and a second composite portion 54. As shown in FIG. 2, metallic reinforcement plate 50 defines the corner 56 defining the angle between the connected portions 52, 54. Plate 50 can be manufactured from a metallic material, for example a suitable alloy, such that the corner will have sufficient durability to withstand expected operating conditions and stresses. The angle is defined between a first arm 58 and a second arm 60. As shown, first arm 58 at least partially overlaps a portion of first composite portion 52, while second arm 60 at least partially overlaps a portion of second composite portion 54.

The angle 62 that is defined between arms 58, 60 is shown in FIG. 2 as being 90 degrees, but it should be appreciated that the configuration of FIG. 2 could be equally well suited to components having corners or flange connections of different angles for example greater than 0 degrees and less than 180 degrees, or between 20 degrees and 160 degrees. It should be appreciated that angle 62 is measured between surfaces of arms 58, 60 that are in contact with first and second portions 52, 54. In this way, forces exerted on the area of overlap between arms 58, 60 and portions 52, 54 will likely be in compression.

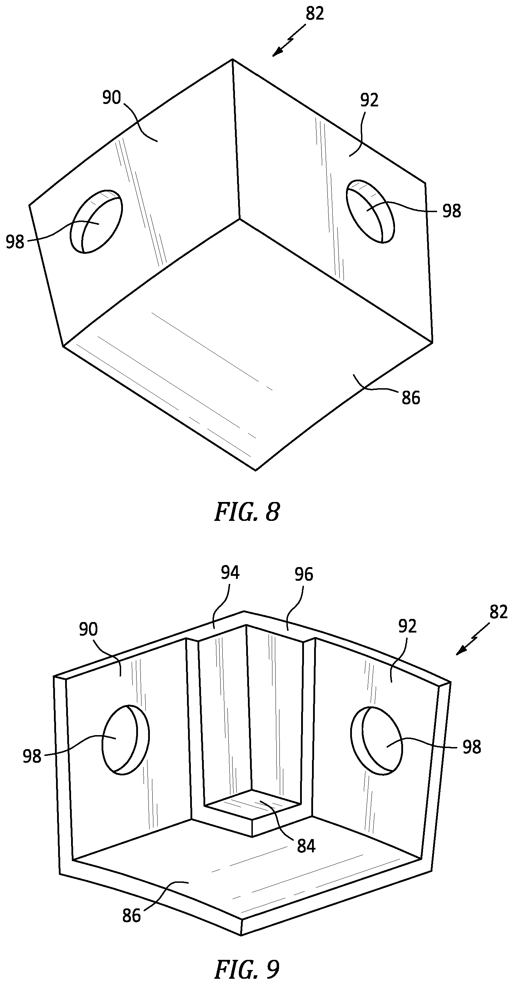

Still referring to FIG. 2, in a non-limiting configuration, composite portions 52, 54 will have a reduced thickness at areas where arms 58, 60 will overlap to allow for a more stable connection between arms 58, 60 and portions 52, 54. This is illustrated with portion 52 having a full thickness portion 64 showing 3 schematically illustrated plies, and only two such plies in portion 52 which overlaps with arm 58. Further, arm 58 is sized to mate with portion 52 such that the combined thickness of arm 58 and portion 52 is substantially the same as full thickness portion 64. Further, in some configurations, the non-overlapping portions of plate 50 can have substantially the same thickness as the combined thickness of portion 52 and arm 58, and also as full thickness composite portion 64. Still further, it should be appreciated that in some applications, plate 50 can have portions of other or varying thickness as well, depending upon the specific component and flange structure (for example as illustrated in the embodiments of FIGS. 8-10 described below).

The connection as shown in FIG. 2 can be a simple interface between plies and plate, such as a butt, scarf, or other type of joint which improves producibility and quality of the joint.

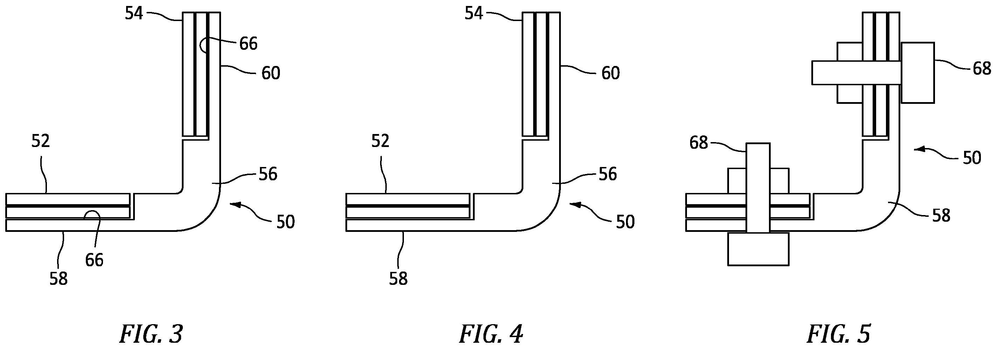

FIG. 3 shows another configuration wherein at least one arm 58, 60, in this case both arms 58, 60, are bonded to first and second composite portions 52, 54. In FIG. 3, the bond adhesive is shown at 66. Any adhesive suitable for bonding metallic arms 58, 60 to composite portions 52, 54, can be utilized for bonding. Non-limiting examples include silicone, epoxy, BMI, polyimide and the like, and combinations thereof.

FIG. 4 shows another non-limiting configuration wherein the composite 58, 60 and plate 50 are co-bonded. In this configuration, plate 50 goes through the molding process along with the composite. That is, plate 50 is placed on the composite prior to it reaching or being in a rigid state. The configuration of FIG. 4 may or may not include an adhesive film in between the composite and the plate similar to the configuration of FIG 3.

FIG. 5 shows a further non-limiting configuration wherein portions 52, 54 and arms 58, 60 are joined with mechanical fasteners 68. Of course, it should be appreciated that multiple different configurations for joining portions 52, 54 and arms 58, 60 can also be utilized within the scope of this disclosure.

It should be appreciated that the composite material referred to herein can be any of numerous composites such as Polymer Matrix Composites (PMC), Metal Matrix Composites (MMC), Ceramic Matrix Composites (CMC) and combinations thereof.

The metallic material of the metallic reinforcement plate can be metallic generally, and in one non-limiting configuration can be selected from the group consisting of Ti-based alloy, Co-based alloy, Ni-based alloy and combinations thereof. Further, in some instances it is also suitable to use ceramic, aluminum and combinations thereof, with each other and/or with the metallic materials set forth above.

The components with which the plate and composite materials as disclosed herein can be used include but are not limited to cases, ducts, rings, liners and combinations thereof. Further, the reinforcement plate as disclosed herein can also find use in various compressor components and the like.

In another non-limiting configuration, a method is disclosed whereby a metallic reinforcement plate can be used to join two different composite portions of a component. In this method, two composite portions, which can be different portions of a flange, can be joined together with a plate as disclosed above. The composite portions can be cured first and then joined with the plate, or the composite portions can instead be rigidized or cured after assembly with the plate. In this case, materials for the composite portions and the metallic reinforcement plate can be selected to have substantially the same coefficient of thermal expansion.

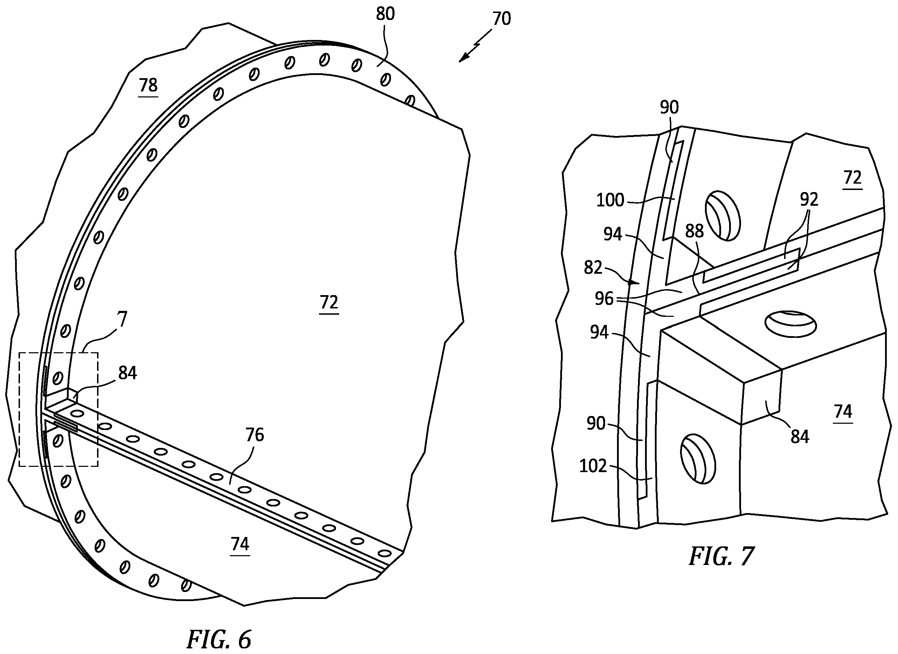

Turning now to FIG. 6, a further non-limiting embodiment is illustrated. In FIG. 6, a cylindrical component 70 is shown and comprises a first component portion 72 and a second component portion 74. These component portions are made of composite materials, and are to be joined along flange 76, and also to another component 78 at flange 80. Flange 76 intersects with flange 80 and at the intersection there is an area which can be strengthened with a metallic reinforcement plate 82. FIG. 7 illustrates an enlarged portion of FIG. 6, and both drawings show plate 82 having a floor portion 84 that rests on the cylindrical surface of each of component portions 72, 74. The portion shown at 84 is the portion that is visible through component portions 72, 74. Referring to FIGS 8-10, the rest of the floor 86 can be seen. In FIGS. 6 and 7, this portion 86 is beneath the component portion 72, 74 and cannot be seen.

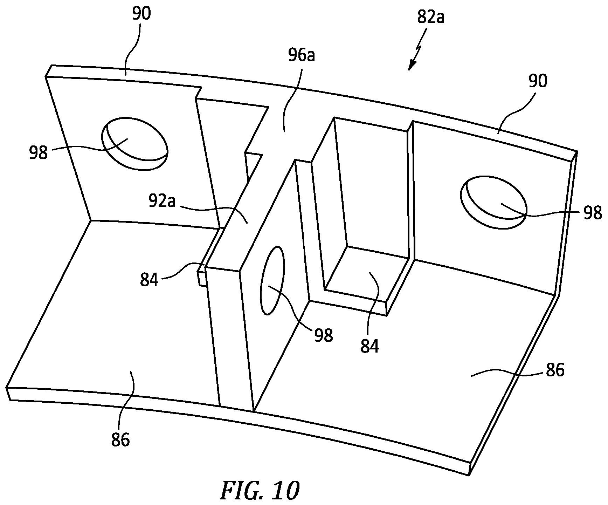

In the embodiment shown in FIGS. 6 and 7, plate 82 is actually two components adjacent to each other as evidenced by the parting line 88 in FIG. 7. In the embodiment of FIG. 10, plate 82a is a single component and otherwise has similar features to the embodiment of FIGS. 6-9.

Returning to FIGS. 6-9, plate 82 also has walls or arms 90, 92 extending upwardly from floor 84, 86. walls or arms 90, 92 extend along a path of each of flange 76 and flange 80. At a point of intersection of walls 90, 92, plate 82 has thickened walls 94, 96 that define a reinforced corner of plate 82 where it supports the corner or joint of a flange, for example the joint of flange 76 or flange 80. Thickened wall portions of plate 82 as shown at 84, 94 and 96 can be the same as the full thickness of the component to which they are mounted or bonded, which is as is illustrated in the drawings. the remainder of walls 90, 92 and floor 86 have a thickness that is a partial thickness as compared to wall thicknesses of flanges 76, 80 and component portions 72, 74. One or more openings or apertures 98 can be provided to match with the position of holes or openings in flanges 76, 80, and can serve to allow passage of a mechanical fastening device or other structure, for example to secure plates 82, 82a in place relative to composite component portions 72, 74 and flanges 76, 80 positioned thereon.

FIG. 7 illustrates how arms 90 of plate 82 extend along and behind wall portions 100, 102 of composite component portions 72, 74. In this way, plate 82 supports the flange joint of this connection in similar manner to the simpler embodiment of FIGS. 2-5.

Referring to FIG. 10, this illustration shows a plate 82a that corresponds to both plates 82 of the embodiment of FIGS. 6-9. Thus, rather than two walls or arms 92 adjacent to each other, plate 82a has a single thicker wall 92a. Otherwise, plate 82a is the same as plates 82.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A composite component (70) for a gas turbine engine, comprising:
a first composite component portion (52; 72; 74; 78);
a second composite component portion (54; 76; 80); and
a metallic reinforcement plate (50; 82; 82a) connecting the first composite component portion (52; 72; 74; 78) and the second composite component portion (54; 76; 80), wherein the metallic reinforcement plate has a first arm (58; 90) at least partially overlapping the first composite component portion, and a second arm (60; 92; 92a) at least partially overlapping the second composite component portion.

2. The composite component of claim 1, wherein the first arm (58; 90) and the second arm (60; 92; 92a) define an angle (62) therebetween which is greater than 0 degrees and less than 180 degrees, optionally between 20 degrees and 160 degrees.

3. The composite component of claim 2, wherein the first arm (58; 90) and the second arm (60; 92; 92a) have contact surfaces facing the first composite component portion (52; 72; 74; 78) and the second composite component portion (54; 76; 80), and the contact surfaces define the angle (62).

4. The composite component of any preceding claim, wherein the first composite component portion (52; 72; 74; 78) and the second composite component portion (54; 76; 80) have a thickness, and wherein the thickness is reduced where the first arm (58; 90) and the second arm (60; 92; 92a) overlap the first composite component portion (52; 72; 74; 78) and the second composite component portion (54; 76; 80).

5. The composite component of any preceding claim, wherein the first composite component portion (52; 72; 74; 78) and the second composite component portion (54; 76; 80) comprise PMC, MMC, CMC and combinations thereof.

6. The composite component of any preceding claim, wherein at least one of the first arm (58; 90) and the second arm (60; 92; 92a) is bonded to at least one of the first composite component portion (52; 72; 74; 78) and the second composite component portion (54; 76; 80).

7. The composite component of any of claims 1 to 5, wherein at least one of the first arm (58; 90) and the second arm (60; 92; 92a) is co-bonded to at least one of the first composite component portion (52; 72; 74; 78) and the second composite component portion (54; 76; 80).

8. The composite component of any of claims 1 to 5, wherein at least one of the first arm (58; 90) and the second arm (60; 92; 92a) is mechanically fastened to at least one of the first composite component portion (52; 72; 74; 78) and the second composite component portion (54; 76; 80).

9. The composite component of any preceding claim, wherein composite material of the first and second composite component portions (52, 54; 72, 74) and metallic material of the metallic reinforcement plate (50; 82; 82a) are selected to have substantially the same coefficient of thermal expansion.

10. The composite component of any preceding claim, wherein metallic material of the metallic reinforcement plate (50; 82; 82a) is selected from the group consisting of Ti-based alloy, Co-based alloy, Ni-based alloy, aluminum and combinations thereof; and/or wherein the metallic reinforcement plate (50; 82; 82a) further comprises a ceramic material.

11. The composite component of any preceding claim, wherein the component (70) is selected from the group consisting of cases, ducts, rings, liners and combinations thereof.

12. The composite component of any preceding claim, wherein the first composite component portion (52; 72; 74; 78) comprises a body portion of the component (70) and the second composite component portion (54; **76;** 80) comprises a flange (76; 80) of the component (70).

13. The composite component of any of claims 1 to 11, wherein the first composite component portion (72) and the second composite component portion (74) define at least two flanges (76, 80), and wherein the metallic reinforcement plate has arms (90, 92a) to extend along all of the at least two flanges (76, 80), optionally wherein the first composite component portion (72) and the second composite component portion (74) define a cylindrical surface with an axial flange (76) at a meeting line between the first composite component portion (72) and the second composite component portion (74), and a radial flange (80) along an edge of each of the first composite component portion (72) and the second composite component portion (74), and wherein the metallic reinforcement plate (82; 82a) has a floor plate (86) extending along a surface of the cylindrical surface, an axial reinforcement arm (92a) for reinforcing along the axial flange (76), and a radial arm (90) for reinforcing the radial flange (80) .

14. A metallic reinforcement plate for composite components, comprising:
a floor (86) having a floor thickness;
a first flange reinforcement arm (90) extending from the floor (86) and having a first arm thickness;
a second flange reinforcement arm (92a) extending from the floor (86) and intersecting the first flange reinforcement arm (90), the second flange reinforcement arm (92a) having a second arm thickness, wherein the first arm thickness and the second arm thickness have increased thickness at a point of intersection of the first flange reinforcement arm (90) and the second flange reinforcement arm (92a), optionally wherein the floor (86) has an increased thickness at a point of intersection of the first flange reinforcement arm (90) and the second flange reinforcement arm (92a).

15. A method for making a composite component (70), wherein the composite component (70) comprises at least a first composite component portion (52; 72; 74; 78) and a second composite component portion (54; 76; 80), the method comprising the steps of:
joining the first composite component portion (52; 72; 74; 78) to a metallic reinforcement plate (50; 82; 82a), wherein the metallic reinforcement plate (50; 82; 82a) comprises at least a first arm (58; 90) and a second arm (60; 92; 92a), by overlapping the first arm (58; 90) and the first composite component portion (52; 72; 74; 78); and
joining the second composite component portion (54; 76; 80) to the metallic reinforcement plate (50; 82; 82a) by overlapping the second arm (60; 92; 92a) and the second composite component portion (54; 76; 80).
